# EUROPEAN PATENT SPECIFICATION

(11) **EP 1 393 062 B1**
(45) Date of publication and mention of the grant of the patent: **17.01.2018**
(21) Application number: 02727601.3
(22) Date of filing: 16.05.2002
(51) Int. Cl.: G01N 31/10, C10G 11/18, B01J 8/24

(54) **PROCESS FOR SMALL-SCALE TESTING OF FCC CATALYSTS**
KLEINTECHNISCHES TESTVERFAHREN FÜR FCC-KATALYSATOREN
ESSAI A ECHELLE REDUITE DE CATALYSEURS POUR CRAQUAGE CATALYTIQUE FLUIDE

(30) Priority: 05.06.2001 EP 01202148
(43) Date of publication of application: 03.03.2004
(73) Proprietor: Albemarle Netherlands B.V., 3818 LH Amersfoort (NL)
(72) Inventor: O'CONNOR, Paul, NL-3871 KM Hoevelaken (NL); BERENDS, Edwin, Mark, NL-1318 CD Almere-Stad (NL); BAAS, Martinus, Johannes, Maria, NL-1628 WL Hoorn (NL); BREVOORD, Eelko, NL-3871 RR Hoevelaken (NL)
(74) Representative: Hoyng Rokh Monegier LLP
(86) International application number: PCT/EP2002/005385
(87) International publication number: WO 2002/099415

(56) References cited:
- DE-A- 4 103 450
- US-A- 4 325 809
- US-A- 4 325 809
- US-A- 4 459 203
- US-A- 5 318 691
- US-A- 6 069 012
- LAPPAS A A ET AL: "The effect of catalyst properties on the in situ reduction of sulfur in FCC gasoline", APPLIED CATALYSIS A: GENERAL, ELSEVIER SCIENCE, AMSTERDAM, NL, vol. 262, no. 1, 10 May 2004 (2004-05-10), pages 31-41, XP004503117, ISSN: 0926-860X, DOI: 10.1016/J.APCATA.2003.11.014
- "Akzo Nobel Licenses Novel Test Units", INTERNET CITATION, March 2002 (2002-03), XP002969088, [retrieved on 2002-12-18]
- PEARCE J ET AL: "Ultra Short Contact Time Cracking And Its Simulation In The Laboratory", AICHE SYMPOSIUM SERIES, AMERICAN INSTITUTE OF CHEMICAL ENGINEERS, NEW YORK, NY, US, 10 March 1998 (1998-03-10), pages 1-15, XP002969086, ISSN: 0065-8812
- PIMENTA R ET AL: "FCC TESTING PHILOSOPHY", AKZO CATALYSTS SYMPOSIUM. FLUID CATALYTIC CRACKING, XX, XX, 1 June 1998 (1998-06-01), pages 1-19, XP002969089,

## Description

The present invention relates to a process and an apparatus for testing FCC catalysts on a small scale for evaluation of the fluid catalytic cracking processes with particular regard to catalysts, feedstocks, and process parameters. Fluid .catalytic cracking is the dominant catalytic process for producing transportation fuels and chemical feedstocks world-wide. Consequently, extensive effort has gone into developing useful small-scale tests pertinent to this process for the purposes of developing improved catalysts, quantifying and correlating the cracking character of various feedstocks based on their respective properties, understanding the implications of different process conditions, and improving commercial process design.

Two broad approaches commonly used in small-scale studies of the fluid catalytic cracking process are continuous processing units and batch processing units. The continuous processing units are basically scaled-down versions (bench or pilot-scale riser reactors) of commercial operating units and are typically very complex systems that are expensive to construct, operate, and maintain. Such a small-scale continuous process test device is described in Chem. Eng. Sci. (1996), 51(11), 3039-3044. In addition, compared to small-scale batch cracking units, such small-scale continuous cracking units require large samples of catalyst and feed. Batch processing units use a single charge of catalyst (typically less than 200 g) and process a small sample mass of feed that is usually injected into the catalyst for a period of time of the order of a minute. The ratio of catalyst mass to feed mass is referred to as the catalyst-to-oil ratio and typically ranges from 3 to 10. Batch processes provide considerable cost and speed advantages over continuous units for laboratory studies, primarily because of their relative simplicity and their smaller scale.

The most commonly used batch process is the so-called microactivity test (MAT). This test is described in ASTM D-3907-86. Said test is the main tool for basic FCC research and catalyst and feedstock evaluation and monitoring. See for instance, Applied Cat., A: General152 (1997), 7-26, Applied. Cat., A (1997), 164 (1-2), 35-45, Stud. Surf. Sci. Catal. (1997) 111 (catalyst deactivation 1997), 303-310, Catalyst. Cracking, A/ChE, Symposium Series (1992) No. 291, Vol. 88, 82-87, and *A*/*ChE (*1998) Spring National Meeting, New Orleans 3/8-12/8. Despite its widespread use, the possibilities to extrapolate the results obtained from a MAT test to full-scale FCC operations are limited owing to the wide difference between conditions in the MAT test and those in full-scale FCC operation. Below, the conditions in full-scale FCC operation and the conditions in the MAT test are listed.

| | ASTM-MAT | Full-scale FCC |
|---|---|---|
| reactor type | fixed bed | fluidised bed, riser |
| feed dispersion | no | more than 2% steam |
| preheat | no | fast |
| injection time (s) | 14 | 0-1 |
| catalyst/feed contact time (s). | 75 | 2-10 |
| catalyst temperature (°C) | 483 | 650-750 |
| pressure (PSIG) | atmospheric | 10-20 |

As a result of these wide differences in conditions, the MAT test does not give a realistic prediction of the selectivities of catalysts in real FCC units. This has been studied in Applied Cat. 63 (1990) 197-258 and Applied Cat. 43 (1988) 213-237. For this reason other tests have been developed, such as the microsimulation test (MST) from Akzo Nobel as described in J. Am. Chern. Soc., Div. Pet. Chem. (1988) 33(4), 656-62 and in ACS. Symp. Series, No. 411, 135-147 (1989). In this test a catalyst/feed contact time of 15 seconds is realised, which is more in line with real FCC processing than the catalyst/feed contact time of 75 seconds in the ASTM-MAT test. In Hydrocarbon Processing, Sept. 1989, 63-4, a microactivity test is described with a contact time of 18 seconds and a cracking temperature of 510°C.
In Chem. Eng. Sci. 64 (1999) a bench-scale FCC test device is described with very short contact times (50- 500 ms), but this device is a downflow device using catalyst temperatures of about 400-600°C and thus not a proper simulation device for real FCC units, which contain upflow riser reactors.

In US 6,069,012 a laboratory-scale fluid catalytic cracking apparatus is described. Said apparatus includes a reactor having a removable feed injector to vary the catalyst/feed contact time. The feed injector is inserted downwards into the catalyst bed. Relatively large amounts of catalyst (9 g in the examples) are used in this apparatus. The injection time of this apparatus is not mentioned. Although it is indicated that the catalyst bed is fluidised, it is a so-called slow, fixed fluidised bed which does not resemble the fast fluidised beds in a full-scale FCC unit.

Pimenta et al., "FCC Testing philosophy", Akzo Nobel Catatlysts Symposium, Noordwijk, NL, June 1998, discusses deactivation and testing techniques that improve the ability of laboratory testing to predict commercial FCC yields. A small scale test based on a fixed fluid bed reactor is discussed in this relation. This test operates on the basis of the mixing of ex-situ regenerated catalyst (650°C-720°C) with preheated feed; a 1 second feed injection time; and a 2-5 second product residence time.

Although the microsimulation tests give a more accurate prediction of catalyst selectivity in general, with the necessity to process heavier feedstocks, to obtain higher gasoline motor octanes, and to fulfil the environmental specifications on NOₓ, SOₓ as well as sulphur levels in gasoline, there is an ongoing need for reproducible tests which also accurately simulate resid FCC operations, operations at higher riser temperatures, operations with higher catalyst to oil ratios, etc.

To this end a process has been developed for testing FCC catalysts on a small scale wherein:
a) the feed to be cracked is heated to a temperature between 50 and 500°C,
b) the heated feed is injected into a riser reactor containing the FCC catalyst to be tested having a temperature between 500 and 800°C and a pressure of 135.8-308.2 kPa (5-30 psig), the injection time being less than 2 seconds,
c) the feed is contacted with the FCC catalyst under fluidised conditions for a contact time of less than 8 seconds, and
d) the feed is stripped from the FCC catalyst and the properties of the product are analysed.

With the process according *to* the invention the mass transfer and diffusion limitations of commercial FCC units are properly simulated. In Prepr. Am. Chem. Soc., Div. Pet. Chem. (1996), (41(2), 359-60, a lab-scale short contact time test is described wherein a short contact time and a short injection time are mentioned. However, it is not indicated how this short injection time is obtained. Further the feed temperature and the catalyst temperature are not mentioned. As indicated above, these features are essential to proper FCC simulation.

In this context, the term small-scale usually refers to the use of less than 200 g of catalyst. However, in the process according to the invention typically less than 10 g of catalyst, preferably less than 3 g of catalyst, more preferably less than 2 g of catalyst, and most preferably less than 1 g catalyst can be used without hampering the reproducibility and accuracy of the test.

The feed to be cracked is heated to a temperature between 50 and 500°C, preferably between 50 and 100°C. Optionally, the feed is heated under a pressure above atmospheric pressure.

An injection time of less than 2 seconds is essential to proper simulation of the mass transfer and diffusion limitations in full-scale FCC units. Especially when cracking heavier feeds such as resids, a short injection time becomes very important.
The short injection time can be realised with the use of a high-pressure pump. Suitable high-pressure pumps are the ones known from cars with injection engines, for instance high-pressure diesel injection pumps from Bosch®, Volkswagen®, and General Motors®. High-pressure diesel injection pumps have an injection time of less than 2 seconds. The injector takes care of the injection and atomisation of the feed into the catalyst bed. The newly developed injection pumps even have injection times of less than 1 second. Volkswagen® has developed high-pressure injection pumps with injection times of the order of milliseconds. With these types of injection pumps (having injection times of the order of milliseconds) even newly developed FCC operations can be simulated wherein the feed is pre-vaporised. These newly developed FCC operations are described in patent applications in the name of Shell and Petrobras. Therefore, an injection time of less than 1 second, or more preferably of less than 0.5 seconds is preferred, because in full-scale FCC units the injection time is also less than 1 second, of the order of 0.5 seconds. In pre-vaporised FCC operation the injection time is even shorter.

In the method according to the invention the FCC catalyst is contacted with the feed under fluidised conditions. This is realised by injecting the atomised oil feed and the carrier gas into the lower part of the riser reactor. In this way a fast fluidised bed is obtained which resembles the fluidised beds in full-scale FCC units. In fixed beds a coke gradient is formed over the hardware and the catalyst bed, which lowers the mass balance and allows only the light part of the feed to contact the catalyst. The use of a fluidised bed ensures a proper contact of the entire feed with the catalyst. As mentioned above, it is essential that the catalyst/feed contact time is less than 8 seconds, preferably less than 5 seconds, most preferably less than 3 seconds.
The pressure in the reactor is 135.8-308.2 kPa (5-30 psig), more preferably 135.8-170.3 kPa (5-10 psig).

The process according to the invention is suitable for testing FCC catalysts with any conventional FCC feed, such as Vacuum Gas Oil, gas oil (aromatic, paraffinic, naphthenic), light cycle oil, and heavy vacuum distillate. However, one of the major advantages of the method according to the invention over prior art test methods is that it enables catalyst testing for the fluidised cracking of resid feeds in realistic conversion and yield with proper reproducibility. For instance, the process is highly suitable for feedstocks having a Conradson Carbon Residue of up to 15 wt%, more particularly a Conradson Carbon residue of between 9 and 15 wt%.

Prior to the process according to the invention, the catalyst to be tested may be submitted to a deactivation procedure, such as steam deactivation, cyclic deactivation with Ni and/or V, V deactivation followed by mild steam deactivation, etc. An overview of several deactivation procedures is given in *S*tudies in Surface Sci. and Cat. Vol 76 (1993) 223-255. Deactivation procedures are known in the field and need no further elucidation here.

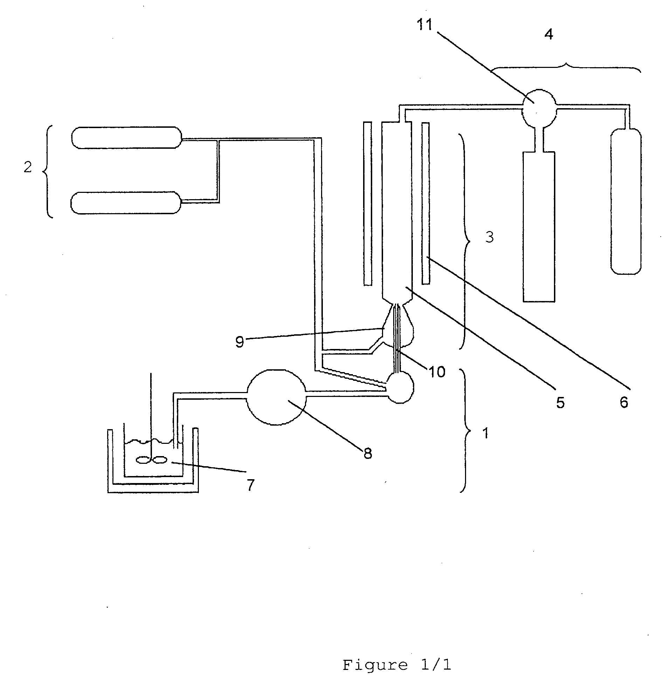

The present invention also pertains to an apparatus for conducting the process according to the invention. Said apparatus, of which a schematic representation is given in Figure 1, comprises a riser reactor section (3) and a product collection section (4), an oil feed section (1) and a gas feed section (2), which oil feed section (1) and a gas feed section (2) are connected to the lower part of the riser reactor section (3), which is connected to the product collection section (4). The riser reactor section comprises a reactor (5) adapted for use at a pressure of 135.8-308.2 kPa (5-30 psig) and heating means (6), while the oil feed section comprises an oil storage vessel (7) and a high-pressure injection pump -(8) and wherein the lower end of the reactor has a fluidisation gas inlet (9) and an oil feed/fluidisation gas inlet (10) wherein the fluidisation gas is guided to the lower end of the riser reactor both directly and together with the oil feed and wherein the high-pressure injection pump injects and atomises the feed through a nozzle into the lower end of the riser reactor with a feed injection time of less than 2 seconds. Optionally, the oil storage vessel (7) is heated and stirred.

As mentioned above, a high-pressure injection pump is necessary to ensure a feed injection time of less than 2 seconds. The feed is injected and atomised through a nozzle into the lower end of the riser reactor. The injection time is controlled by moving the control rod of the injection pump. The amount of oil injected is controlled by the frequency and the stroke of the injection pump.

The gases needed for fluidising and stripping the catalyst bed are injected into the lower end of the riser reactor. Usually nitrogen is used for this purpose, but any inert gas is suitable. The fluidisation gas is guided to the lower end of the riser reactor both directly and together with the oil feed. Oxygen or air may be used to burn the coke from the catalyst. In order to control the gas flow, mass flow controllers can be used.

The riser reactor section comprises a reactor and heating means. The heating means can be any heating means commonly used in laboratories, such as an oven, heating coils, oil baths, etc. Preferred is an oven. The reactor preferably has a conical lower end. The lower end of the reactor has a fluidisation gas inlet (9) and an oil feed/fluidisation gas inlet (10).

The product collection section is divided up into a liquid and a gas collection system. Gases that leave the system are partly condensed in a receiver (11), which is mounted in a bath which, depending on the applied feedstock, has a temperature between -5 and -30°C, preferably between -10 and -15°C. The non-condensable gases are collected in a gas bottle. The yields of liquid product and gas products are determined by conventional analytical methods known in the art.

### EXAMPLES

### Example 1

Table 1 compares the conversion and cracking products formed during a cracking process in a full-scale FCC unit (FCCU) and in a testing apparatus according to the invention (SCT-RT).
The feed temperature in the testing process according to the invention was 85°C, the feed injection temperature 720°C, the pressure in the reactor was 5 psig, the injection time 1.0 s, and the average catalyst-feed contact time between 2 and 4 seconds. 18 grams of catalyst were used in this small-scale test.
The cat-to-oil ratio in the full-scale FCC unit and the small-scale testing apparatus was 5.9 and 6.0, respectively.

Table 1 shows that with an increase in pressure of about 170.3 kPa (10 psig), the increase in conversion and the change in product yield in the testing apparatus and in the FCC unit are comparable.

**Table 1**

| | SCT-RT | FCCU |
|---|---|---|
| Delta p (kPa / psig) | +163.4/+9 | +170.3 /+10 |
| Delta Conversion (wt%) | +2.2 | +2.4 |
| Yield shifts (wt%): | | |
| Propene/propane | -0.03 | -0.03 |
| Butenes/butane | -0.06 | -0.06 |
| Gasoline | +0.6 | +0.6 |
| LCO | -0.2 | -0.9 |
| Bottoms | -2.0 | -1.4 |
| Coke | +0.5 | +0.9 |

### Example 2

Table 2 compares the conversion in a full-scale FCC unit and in a testing apparatus according to the invention for two different catalysts. Catalyst A is a conventional FCC catalyst; Catalyst B is a conventional FCC catalyst which has been severely deactivated in the FCC unit, resulting in a reduced accessibility. The accessibility was measured using the test disclosed in non pre-published European Patent Application No. 01202147.3.
The feed temperature in the testing process according to the invention was 85°C, the feed injection temperature 640°C, the pressure in the reactor was atmospheric, the injection time 1.0 s, and the average catalyst-feed contact time between 2 and 4 seconds. 18 grams of catalyst were used in this small-scale test.

Table 2 indicates 15 and 9 wt% lower conversions for catalyst B and catalyst A, respectively.

**Table 2**

| | Catalyst A | Catalyst B |
|---|---|---|
| FCCU conversion (wt%) | Base | -15 |
| SCT-RT conversion (wt%) | Base | -9 |
| | | |
| Akzo Accessibilty Index | 5.9 | 2.6 |
| SA-BET (m²/g) | 113 | 112 |
| PV-micro (ml/g) | 0.038 | 0.038 |
| SA-Meso (m²/g) | 31 | 30 |
| Alz03 (wt%) | 34.1 | 33.7 |
| REz03 (wt%) | 1.99 | 1.88 |
| NazO (wt%) | 0.64 | 0.55 |
| Ni (ppm) | 2,915 | 2,787 |
| V (ppm) | 4,029 | 2,960 |

### Example 3

The performance of two different FCC catalysts is compared in a full-scale FCC unit (FCCU) and in a testing apparatus according to the invention (SCT-RT). The difference between these two catalysts in catalyst-to-oil ratio, coke formation, and bottoms formation is presented in Table 3.
The feed temperature in the testing process according to the invention was 85°C, the feed injection temperature 640°C, the pressure in the reactor was 135.8 kPa (5 psig), the injection time 1.0 s, and the average catalyst-feed contact time between 2 and 4 seconds. 18 grams of catalyst were used in this small-scale test.

It is clear that the same trends, showing small differences in performance, can be observed in the testing apparatus according to the invention and in the full-scale FCC unit. As the skilled man knows, such trends cannot be observed with the conventional microactivity test (MAT).

**Table 3**

| | SCT-RT | FCCU |
|---|---|---|
| Cat-to-oil ratio | +1.0 | +1.8 |
| Delta coke (%) | -0.11 | -0.18 |
| Bottoms (wt%) | -3.7 | -1.8 |

### Example4

Table 4 shows the conversion and recovery of 15 grams of a conventional FCC catalyst at a constant cat-to-oil ratio during the cracking of feeds with different Conradson carbon residues (CCR) in the testing apparatus according to the invention. It is clear from this Table that the process according to the invention is highly suitable for studying the cracking of heavy feedstocks.

**Table 4**

| | Feed A | Feed B | Feed C |
|---|---|---|---|
| Feed temperature (°C) | 85 | 85 | 140 |
| Feed injection temperature CCC) | 680 | 680 | 680 |
| Feed injection time (s) | 1.0 | 1.0 | 1.0 |
| | | | |
| CCR (wt%) | 3.4 | 5.9 | 9.7 |
| Spec.Gravity, 15oC (g/ml) | 0.92 | 0.93 | 0.98 |
| | | | |
| Cat-to-oil ratio | 5.0 | 5.0 | 5.0 |
| Conversion (wt%) | 67.6 | 73.7 | 69.0 |
| Recovery (wt%) | 100.4 | 99.8 | 102.0 |

## Claims

1. Process for testing FCC catalysts on a small scale wherein:
a) the feed to be cracked is heated to a temperature between 50 and 500°C,
b) the heated feed is injected into a riser reactor containing the FCC catalyst to be tested having a temperature between 500 and 800°C, the injection time being less than 2 seconds,
c) the feed is contacted with the FCC catalyst under fluidised conditions for a contact time of less than 8 seconds,
wherein the pressure in the reactor is 135.8-308.2 KPa (5-30 psig) and
d) the feed is stripped from the FCC catalyst and the properties of the product are analysed.

2. Process according to claim 1 wherein the injection time is less than 1 second.

3. Process according to claim 1 or 2 wherein the injection time is less than 0.5 seconds.

4. Process according to any one of the preceding claims wherein the contact time is less than 5 seconds.

5. Process according to claim 4 wherein the contact time is less than 3 seconds.

6. Process according to any one of the preceding claims wherein the feed is a resid feedstock having a Conradson Carbon Residue of up to 15 wt%.

7. Process according to claim 6 wherein the feed is a resid feedstock having a Conradson Carbon Residue between 9 and 15 wt%.

8. Apparatus for testing FCC catalysts on a small scale comprising a riser reactor section (3) and a product collection section (4), an oil feed section (1) and a gas feed section (2), which oil feed section (1) and a gas feed section (2) are connected to the lower part of the riser reactor section (3), which is connected to the product collection section (4), wherein the reactor section comprises a reactor (5) adapted for use at a pressure of 135.8-308.2 kPa (5-30 psig) and heating means (6), and wherein the oil feed section (1) comprises an oil storage vessel (7) and a high-pressure injection pump (8) and wherein the lower end of the reactor has a fluidisation gas inlet (9) and an oil feed/fluidisation gas inlet (10) wherein the fluidisation gas is guided to the lower end of the riser reactor both directly and together with the oil feed and wherein the high-pressure injection pump injects and atomises the feed through a nozzle into the lower end of the riser reactor with a feed injection time of less than 2 seconds.

9. Apparatus according to claim 8 wherein the high-pressure injection pump (8) is a diesel injection pump.

10. Apparatus according to claim 8 or 9 wherein the oil storage vessel (7) is heated and stirred.

## Patentansprüche

1. Verfahren zum Testen von FCC-Katalysatoren in kleinem Maßstab, wobei:
a) die zu crackende Zufuhr auf eine Temperatur zwischen 50 und 500 °C erhitzt wird,
b) die erhitzte Zufuhr in einen Steigrohrreaktor injiziert wird, der den zu testenden FCC-Katalysator enthält, mit einer Temperatur zwischen 500 und 800 °C, wobei die Injektionszeit weniger als 2 Sekunden ist,
c) die Zufuhr mit dem FCC-Katalysator unter Wirbelbedingungen für eine Kontaktzeit von weniger als 8 Sekunden kontaktiert wird, wobei der Druck im Reaktor 135,8 - 308,2 kPa (5-30 psig) beträgt und
d) die Zufuhr aus dem FCC-Katalysator abgestreift wird und die Eigenschaften des Produkts analysiert werden.

2. Verfahren nach Anspruch 1, wobei die Injektionszeit weniger als 1 Sekunde ist.

3. Verfahren nach Anspruch 1 oder 2, wobei die Injektionszeit weniger als 0.5 Sekunden ist.

4. Verfahren nach einem der vorhergehenden Ansprüche, wobei die Kontaktzeit weniger als 5 Sekunden ist.

5. Verfahren nach Anspruch 4, wobei die Kontaktzeit weniger als 3 Sekunden ist.

6. Verfahren nach einem der vorhergehenden Ansprüche, wobei die Zufuhr ein Resit-Ausgangsmaterial mit einem Conradson-Kohlenstoffrückstand von bis zu 15 Gew.%. ist.

7. Verfahren nach Anspruch 6, wobei die Zufuhr ein Resit-Ausgangsmaterial mit einem Conradson-Kohlenstoffrückstand zwischen 9 und 15 Gew.%. ist.

8. Vorrichtung zum Testen von FCC-Katalysatoren in kleinem Maßstab, umfassend einen Steigrohrreaktorabschnitt (3) und einen Produktsammelabschnitt (4), einen Ölzufuhrabschnitt (1) und einen Gaszufuhr-Abschnitt (2), wobei der Ölzufuhrabschnitt (1) und ein Gaszufuhr-Abschnitt (2) mit dem unteren Abschnitt des Steigrohrreaktorabschnitts (3) verbunden sind, der mit dem Produktsammelabschnitt (4) verbunden ist, wobei der Reaktorabschnitt einen Reaktor (5) umfasst, der zur Verwendung bei einem Druck von 135,8 - 308,2 kPa (5 - 30 psig) ausgelegt ist, und eine Heizvorrichtung (6), und wobei der Ölzufuhrabschnitt (1) einen Ölspeicherbehälter (7) und eine Hochdruckinjektionspumpe (8) umfasst und wobei das untere Ende des Reaktors einen Wirbelgaseinlass (9) aufweist und einen Ölzufuhr/Wirbelgas-Einlass (10), wobei das Wirbelgas zu dem unteren Ende des Steigrohrreaktors geleitet wird, sowohl direkt als auch zusammen mit der Ölzufuhr und wobei die Hochdruckinjektionspumpe die Zufuhr durch eine Düse in das untere Ende des Steigrohrreaktors mit einer Zufuhrinjektionszeit von weniger als 2 Sekunden injiziert und zerstäubt.

9. Vorrichtung nach Anspruch 8, wobei die Hochdruckinjektionspumpe (8) eine Dieselinjektionspumpe ist.

10. Vorrichtung nach Anspruch 8 oder 9, wobei der Ölspeicherbehälter (7) beheizt und gerührt wird.

## Revendications

1. - Procédé d'essai de catalyseurs pour craquage catalytique fluide (FCC) à une échelle réduite, dans lequel :
a) l'alimentation à craquer est chauffée à une température entre 50 et 500 °C,
b) l'alimentation chauffée est injectée dans un réacteur à colonne montante contenant le catalyseur FCC à tester ayant une température entre 500 et 800 °C, la durée d'injection étant de moins de 2 secondes,
c) l'alimentation est mise en contact avec le catalyseur FCC dans des conditions fluidisées pendant un temps de contact de moins de 8 secondes,
la pression dans le réacteur étant de 135,8 - 308,2 kPa (5-30 livres par pouce carré au manomètre), et
d) l'alimentation est séparée du catalyseur FCC et les propriétés du produit sont analysées.

2. - Procédé selon la revendication 1, dans lequel la durée d'injection est de moins de 1 seconde.

3. - Procédé selon l'une des revendications 1 ou 2, dans lequel la durée d'injection est de moins de 0,5 seconde.

4. - Procédé selon l'une quelconque des revendications précédentes, dans lequel le temps de contact est de moins de 5 secondes.

5. - Procédé selon la revendication 4, dans lequel le temps de contact est de moins de 3 secondes.

6. - Procédé selon l'une quelconque des revendications précédentes, dans lequel l'alimentation est une charge d'alimentation résiduelle ayant un Résidu de Carbone Conradson allant jusqu'à 15 % en poids.

7. - Procédé selon la revendication 6, dans lequel l'alimentation est une charge d'alimentation du résidu ayant un Résidu de Carbone Conradson entre 9 et 15 % en poids.

8. - Appareil d'essai de catalyseurs FCC à une échelle réduite comprenant une section de réacteur à colonne montante (3) et une section de collecte de produit (4), une section d'alimentation en huile (1) et une section d'alimentation en gaz (2), laquelle section d'alimentation en huile (1) et une section d'alimentation en gaz (2) sont reliées à la partie inférieure de la section de réacteur à colonne montante (3), laquelle est reliée à la section de collecte de produit (4), la section de réacteur comprenant un réacteur (5) adapté pour une utilisation à une pression de 135,8 - 308,2 kPa (5-30 livres par pouce carré au manomètre) et des moyens de chauffage (6), et la section d'alimentation en huile (1) comprenant une cuve de stockage d'huile (7) et une pompe d'injection à haute pression (8), et l'extrémité inférieure du réacteur ayant une entrée de gaz de fluidisation (9) et une entrée d'alimentation en huile/gaz de fluidisation (10), le gaz de fluidisation étant guidé jusqu'à l'extrémité inférieure du réacteur à colonne montante à la fois directement et conjointement avec l'alimentation en huile, et la pompe d'injection à haute pression injectant et atomisant l'alimentation à travers une buse dans l'extrémité inférieure du réacteur à colonne montante avec une durée d'injection d'alimentation de moins de 2 secondes.

9. - Appareil selon la revendication 8, dans lequel la pompe d'injection à haute pression (8) est une pompe d'injection diesel.

10. - Appareil selon l'une des revendications 8 ou 9, dans lequel la cuve de stockage d'huile (7) est chauffée et agitée.
